# EUROPÄISCHE PATENTANMELDUNG

(11) **EP 1 004 960 A2**
(43) Veröffentlichungstag der Anmeldung: **31.05.2000**
(21) Anmeldenummer: 99122409.8
(22) Anmeldetag: 10.11.1999
(51) Int. Cl.: G06F 9/44

(54) **Verfahren zur Ablage der Anwenderprogramme eines Automatisierungssystems**

(30) Priorität: 23.11.1998 DE 19853970
(71) Anmelder: SIEMENS AKTIENGESELLSCHAFT, 80333 München (DE)
(72) Erfinder: Gebauer, Harald, 90518 Altdorf (DE); Pfahlmann, Lothar Dipl.-Inf. (Univ.), 91083 Baiersdorf (DE); Schmitz, Heiko, 91126 Schwabach (DE); Schulz, Dietmar, 90574 Rosstal (DE)

(57) **Zusammenfassung**

Verfahren zur Ablage der Anwenderprogramme eines Automatisierungssystems, das das Problem veränderter Schnittstellen bzw. globaler Abhängigkeiten und Symboländerungen entschärft

Verfahren bei Anwenderprogrammen eines Automatisierungssystems, bei dem veränderbare Schnittstellen, globale Abhängigkeiten und Symboländerungen durch zusätzliche Rückgewinnungsinformationen bei Bausteinaufrufen des Anwenderprogramms berücksichtigbar sind.

## Beschreibung

Verfahren zur Ablage der Anwenderprogramme eines Automatisierungssystems, das das Problem veränderter Schnittstellen bzw. globaler Abhängigkeiten und Symboländerungen entschärft

In einem Automatisierungsgerät wird ein Anwenderprogramm durch Bausteine repräsentiert, das zyklisch vom Betriebssystem in bestimmten Ablaufebenen (Organisationsbausteine = OB) gestartet wird.

Diese Organisationsbausteine rufen ihrerseits andere Anwenderbausteine, Funktionen (FC ohne Gedächtnis) oder Funktionsbausteine (FB mit Gedächtnis in einem DB) auf, deren Parameter und lokale Daten in Symbolik und Datentyp vom Anwender definiert sind.

Weiterhin können Operanden, die im Anwenderprogramm verwendet werden, in globalen Symboltabellen symbolisch definiert werden. Bestimmte Operanden können in Datenbausteinen (DB) liegen, die ähnlich wie die Parameter der anderen Bausteine symbolische Namen haben.

Der Anwender kann auch reine Typbausteine (UDT = Benutzer definierter Typ) verwenden, die zur Deklaration von Variablen und Parametern in anderen Bausteinen Verwendung finden. Funktionsbausteine können als Multiinstanzen verwendet werden, in anderen FBs als Variable deklariert werden.

Der Anwenderbaustein besteht grundsätzlich aus Teilen, die auf das Automatisierungsgerät gespielt werden (online - Teile), und solchen, die nur in der Datenbasis auf dem PC oder PG verfügbar sind (offline - Teile, diese beinhalten auch die online - Teile). Zu den online - Teilen gehören in erster Linie der ablauffähige Maschinencode des Automatisierungsgeräts (MC7) und Strukturinformation über die Schnittstelle dieses Bausteins (Datentypen der Parameter).

Bisher wird Information über die verwendeten Bausteine in den Bausteinaufrufen, die Information aus der globalen Symboltabelle und der verwendeten Typbausteine offline nicht gespeichert, sondern durch Rückwärtsübersetzung aus dem Code erzeugt, wenn ein Anwenderbaustein im Bausteineditor geöffnet wird.

Bei Bausteinaufrufen wird über einen Vergleich von Zeitstempeln am Baustein geprüft, ob die Schnittstelle des aufgerufenen Bausteines noch die des letzten Speicherns oder Übersetzens sein kann. Die Parameter werden dann aus dem MC7 zugeordnet. Wenn der aufgerufene Baustein nicht paßt, wird kein Bausteinaufruf angezeigt, sondern die vom Compiler erzeugte Sequenz in einer Art Disassembly.

Problematisch ist auch der Fall, daß ein aufgerufener Baustein auf Grund der Zeitstempel-Prüfung als gültig angesehen wird, dieses aber tatsächlich nicht ist, da zum Speicher/Übersetzung Zeitpunkt ein anderer Baustein vorlag.

Die Symbole aus der globalen Symboltabelle oder aus Datenbausteinen werden dann über den Schlüssel Absolut Operand, der sich aus dem MC7-Code ergibt, zum Zeitpunkt des Öffnens des Bausteins bestimmt und angezeigt. Änderungen in der Symboltabelle oder in DBs (Datenbausteinen) werden dabei nicht bemerkt, so daß ggf. andere Symbole erscheinen als beim letzten Speichern oder der letzten Compilierung dieses Bausteines oder keine Symbole für einen ehemals symbolischen Operanden angezeigt werden.

Ähnlich wie die aufgerufenen Bausteine werden die verwendeten Datentypen hantiert. Die gleiche Problematik tritt auch für diesen Fall auf.

Um alles Folgende verstehen zu können, muß man wissen, daß die Step 7 Basissprachen KOP/FUP/AWL bisher die Bausteine nur als Code und Schnittstelle des eigenen Bausteins ablegen. Zur Anzeige oder Bearbeitung erfolgt eine Rückübersetzung dieses Codes; Symbolik oder Referenzen zu anderen Bausteinen werden aus der globalen Symboltabelle und jenen anderen Bausteinen geholt.

Um bestimmte Probleme bezüglich der Programmierung mit Step 7 zu lösen, ist es notwendig, zusätzliche Informationen bei der Übersetzung von Bausteinen mit abzulegen.

Neben den bisherigen Teilen Bausteinschnittstelle und Code sind das
- Aufrufe von anderen Bausteinen
- Zeitstempel der in der eigenen Schnittstelle verwendeten Bausteinen und
- Symbolik des Bausteins
während der letzten Übersetzung, des letzten Speicherns, dieses Bausteins.

Die angesprochenen Probleme sind bekannt als Zeitstempelkonflikte.

Um festzustellen, ob ein Bausteinaufruf noch gültig ist, wird bisher verglichen, ob der Schnittstellenzeitstempel des aufgerufenen Bausteins älter ist, als der Codezeitstempel des Aufrufers. Falls dieser Vergleich fehlschlägt, wird der Bausteinaufruf nicht mehr als Call dargestellt sondern nur noch als expandierter disassambelter Codeteil, da er nicht mehr als reduzierbar (= rückübersetzbar) gilt. Durch Zusatzinfo läßt sich jederzeit der alte Call darstellen und sogar bis auf Ausnahmen feststellen, ob er den gleichen Code erzeugt. Dann sollte der Aufruf weiterhin gültig sein und somit auch nicht dazu führen, daß der Baustein als geändert gilt.

Eben dieser Zeitstempelvergleich wird für die Verwendung von UDTs oder Multiinstanzen in der Schnittstelle verwendet und führt hier dazu, daß ggf. auch ältere aber nicht passende Typen als gültig angesehen und zur Rückübersetzung verwendet werden.

Nach Bearbeitung eines Bausteins kann die Globalsymbolik und auch die Symbolik von verwendeten DBs geändert werden. Beim nächsten Öffnen ordnet der Rückübersetzer ohne Meldung dem Code eine andere Symbolik zu. Man spricht von "absolut führender Programmierung".

Durch Ablegen von Zusatzinfo können die Symbole erhalten bleiben und eine Änderung in der Zuordnung Code (= absolut) zu Symbol wird bemerkt.

Im folgenden wird der Übersetzer/Rückübersetzer als CompIF (Compiler Interface) bezeichnet.

Zur Lösung der oben beschriebenen Probleme sind zusätzliche Rückgewinnungsinformation vorgesehen, die insbesondere den jeweiligen Bausteinen direkt zugeordnet sind.

Um die Erfordernisse beim Lösen der Zeitstempelkonflikte, beim Speichern der Zeitstempel referenzierter Bausteine und im Zusammenhang mit der symbolisch führenden Programmierung erfüllen zu können, benötigt CompIF einen Offline Subblock, der exklusiv für diese Zwecke verwendet wird.

Über Kennungen und einen eigenen Zeitstempel am Anfang des Subblocks wird die Gültigkeit der Zusatzinfo festgestellt. Als Subblock soll der Part 3 (Addinfo) des Typbausteins (FCT,FBT, ..) verwendet werden. An dieser Stelle werden nur kurz die Zielsetzungen/Gründe zum Speichern von Zusatzinfo beschrieben.

Für den ersten Teilaspekt der Erfindung, die Problematik der Schnittstellen-Änderungen zu handhaben, ist es durch Ablage von Zusatzinfo möglich, auch nach Änderung der Schnittstelle des verwendeten Bausteines den Bausteinaufruf so darzustellen, wie ihn der Anwender eingegeben hatte. Natürlich ist das nur innerhalb einer projektierten Verbindung mit gespeicherten oder übersetzten Bausteinen möglich, da aus Kompatibilitätsgründen insbesondere in Bezug auf seine Größe der online Baustein die Zusatzinfo nicht beinhaltet.

### Beispiel:

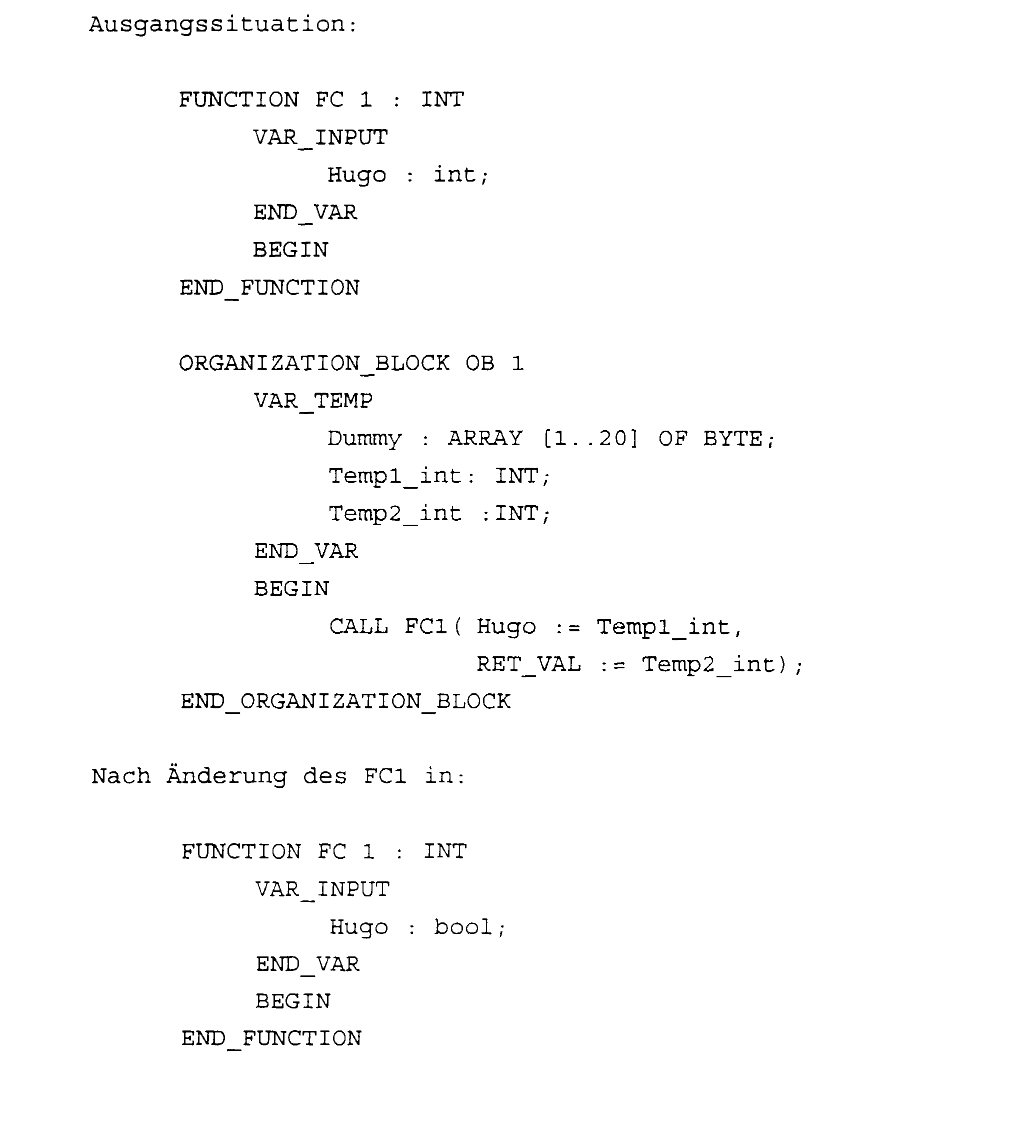

wird für diesen ein neuer 2. Zeitstempel geschrieben. Beim Öffnen von OB1 wird jetzt es jetzt möglich den alten Aufruf
CALL FC1 ( Hugo := Temp1_int, RET_VAL := Temp2_int) ;
weiterhin allerdings als ungültig anzuzeigen. Bisher wurde hierfür die expandierte Sequenz angezeigt:
BLD 1
UC FC 1
P#L0.0
P#L2.0
BLD 2

Durch die Zusatzinfo kann als der alte Call angezeigt werden und mittels Editorhilfe in den neuen aktualisiert werden. Der Anwender kann jedoch auch seinen FC1 wieder zurück ändern, der 2. Zeitstempel ändert sich wiederum, im obigen Fall wird durch die Zusatzinfo dann erkannt, daß der Aufruf weiterhin gilt.

Ein Zusatzinfo-Element je Bausteinaufruf ist: 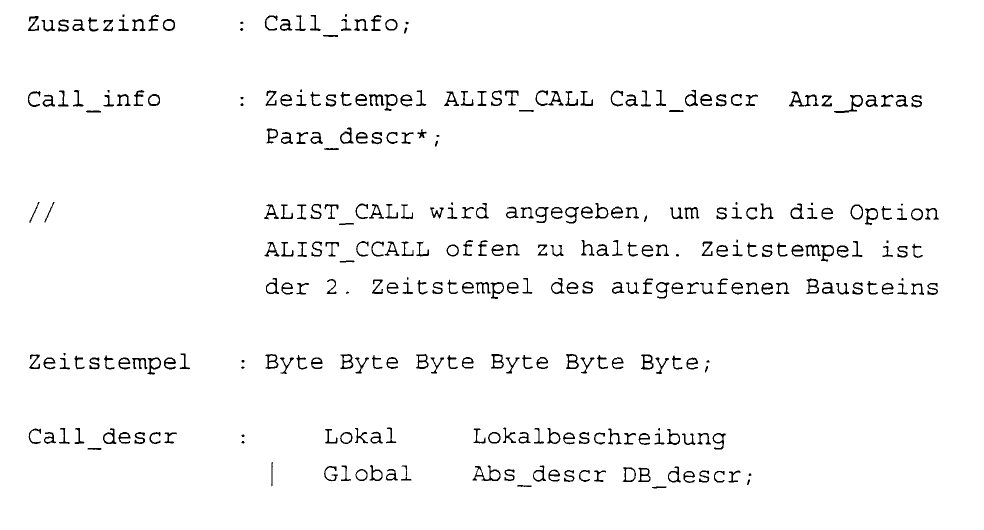 Wenn die Zusatzinfo vorliegt, wird für Aufrufe kein Reduzier-Algorithmus mehr verwendet, da die nach Reduzierung vorliegende Information vollständig in der Zusatzinfo enthalten ist und zusätzliches Reduzieren keinen Sinn macht.

Um zu ermitteln, ob der einzelne Bausteinaufruf beim Öffnen des Bausteins noch gültig ist, d.h. die aktuelle Schnittstelle des Bausteines zum Anzeigen seines Aufrufes verwendet wird, gelten folgende Regeln.
1. Fall: 2. Zeitstempel des aufgerufenen Bausteines ist unverändert
   1.1. Wenn die eigene Schnittstelle unverändert ist, dann gilt der Aufruf mit allen Aktualparametern.
   1.2. Wenn die eigene Schnittstelle verändert ist, was nur nach online Schnittstellen-Änderungen möglich wäre, dann ist die Zusatzinfo ungültig.
2. Fall: 2. Zeitstempel des aufgerufenen Bausteines ist verändert
   2.1. Wenn die Anzahl der Parameter gleich ist und ...
   2.1.1 ... die Datentypen, Symbolnamen und Positionen der Parameter übereinstimmen, gelten die Regeln vom 1. Fall.
   2.1.2 ... Datentypen, Symbolnamen oder Positionen der Parameter differieren, ist der Bausteinaufruf ungültig.
   2.2. Wenn die Anzahl der Parameter ungleich ist, ist der Bausteinaufruf ungültig.

Ein weiterer Aspekt der Erfindung besteht im Rahmen der sogenannten Symbolischen Programmierung, soweit der Modus "symbolisch führend" ausgewählt wurde.

Insgesamt können nur Symbole "symbolisch führend" sein, die ausschließlich im Rumpf der Bausteine verwendet werden. Bei Schnittstellen-Typen, die auch symbolisch dargestellt werden können ist eine globale Lösung für alle Programmiersprachen können ist eine globale Lösung für alle Programmiersprachen mit entsprechendem Kompatibilitätsbruch notwendig. Da bisher keine Lösung bekannt ist, die kompatibel durchführbar wäre kann in der Schnittstelle die Eigenschaft "symbolisch führend" nicht angeboten werden.

Zum symbolischen Programmieren ist es notwendig, daß einmal symbolisch programmierte Operanden auch symbolisch erhalten bleiben, um ihnen eventuell einen anderen absolut-Operanden zuzuordnen. Für lokale Operanden ist das gewährleistet, soweit nicht Schnittstellen aus anderen Bausteinen, die in der eigenen Schnittstelle verwendet werden, geändert wurden.

Um für globale Operanden, deren Symbolik in der Symboltabelle steht, die Symbolik nach Änderung oder Wegfall der Symboltabelle nicht zu verlieren, wird diese mit speziellen Rückgewinnungsinformationen gemäß der Erfindung mit dem Baustein abgespeichert.

Nur so kann auch bei Wegfall einzelner Symbole durch Löschen im Symboleditor dieses noch angezeigt werden und als ungültig gekennzeichnet werden.

Beispiel für symbolische Zugriffe im Bausteinrumpf:
...
U "Signal_0"
U "Motor_DB".betriebsbereit
= "Starter"
...

Im Code ist dann lediglich die korrespondierende Absolutinformation hinterlegt, die beim Rückübersetzen zu Folgendem führt:

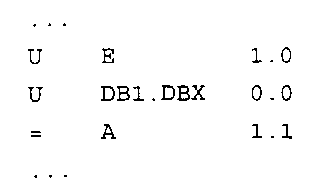

Um also die Symbole zu erhalten, werden diese in einem 2. Schritt hinzugemischt, wobei festgestellt wird, ob sich die Zuordnung geändert hat. Dann wird ein Speichern vorgeschlagen, das zu geändertem Code führt:

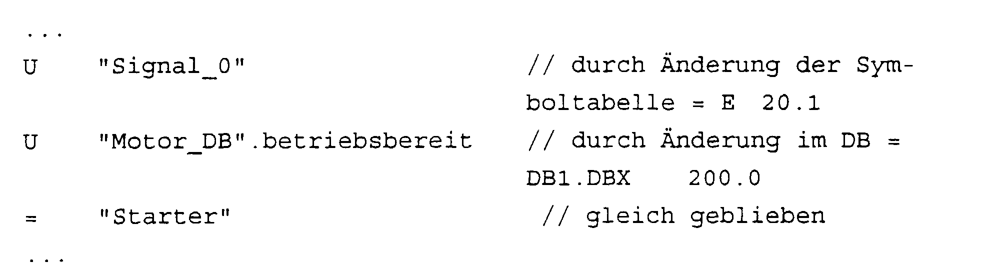

Folgende Grammatik definiert das Ablageformat: 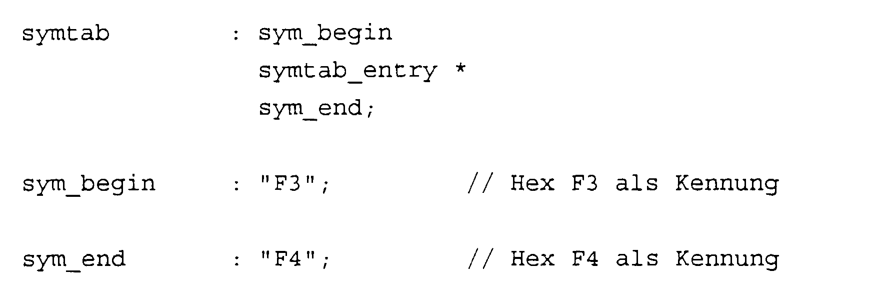 Wobei symtab_entry für den jeweiligen Eintrag in der Symboltabelle steht, der zumindest das jeweilige Symbol und die Absolutadresse, für die das jeweilige Symbol steht, enthält.

Eine alternative Ausgestaltung des zweiten Gegenstands der Erfindung besteht darin, daß, wenn im Code anstelle der Absolutinformation das Symbol abgelegt wird, die lokale Symboltabelle anhand des im Code hinterlegten Symbols durchsucht wird.

## Patentansprüche

1. Verfahren zur Berücksichtigung veränderbarer Schnittstellen bei Anwenderprogrammen eines Automatisierungssystems durch zusätzliche Rückgewinnungsinformationen,
- wobei das Anwenderprogramm aus Bausteinen mit Schnittstellen besteht,
- wobei für jeden Baustein ein Zeitstempel abgespeichert wird, der den Zeitpunkt der letzten Änderung der Schnittstelle des Bausteins angibt,
- wobei der Aufruf eines Bausteins - aufgerufener Baustein - aus einem anderen Baustein - aufrufender Baustein - anhand einer Bezeichnung des aufgerufenen Bausteins erfolgt und wobei für den aufgerufenen Baustein eine die Schnittstelle darstellende Parameterliste vorgesehen ist, die vom aufrufenden Baustein in der mit der Parameterliste vorgegebenen Reihenfolge mit Parametern des gleichfalls mit der Parameterliste vorgegebenen Typs versorgt wird,
- wobei die Rückgewinnungsinformation zu jedem Bausteinaufruf einen den Zeitpunkt der letzten Änderung der Schnittstelle des aufgerufenen Bausteins angebenden Zeitstempel umfaßt,
- wobei beim Öffnen des aufrufenden Bausteins der Zeitstempel der Rückgewinnungsinformation mit dem Zeitstempel des aufgerufenen Bausteins vergleichen wird und
- wobei im Falle der Ungleichheit der beiden Zeitstempel eine Ausnahmebehandlung eingeleitet wird.

2. Verfahren nach Anspruch 1, wobei die Rückgewinnungsinformation zusätzlich auch noch die Bezeichnung des aufgerufenen Bausteins, sowie eine Beschreibung der Parameterliste des aufgerufenen Bausteins umfaßt und wobei die Ausnahmebehandlung die Anzeige der mit der Rückgewinnungsinformation hinterlegten Parameterliste umfaßt.

3. Verfahren nach Anspruch 1 oder 2, wobei die Rückgewinnungsinformation, als jeweils einem aufrufenden Baustein zuordenbare Rückgewinnungsinformation organisiert ist, indem die jeweils einen Baustein zuordenbare Rückgewinnungsinformation nur diejenigen Rückgewinnungsinformationen umfaßt, die für die vom aufrufenden Baustein auszuführenden Aufrufe erforderlich sind.

4. Verfahren nach Anspruch 3, wobei die einem aufrufenden Baustein zuordenbare Rückgewinnungsinformation zusammen mit diesem aufrufenden Baustein abgespeichert wird.

5. Verfahren zur Berücksichtigung globaler Abhängigkeiten und Symboländerungen bei Anwenderprogrammen eines Automatisierungssystems durch zusätzliche Rückgewinnungsinformationen,
- wobei das Programm aus Bausteinen besteht und wobei im Programm anstelle von Adressen zur Erleichterung der Lesbarkeit Symbole verwendbar sind,
- wobei in einer Symboltabelle für jedes verwendete Symbol die zugehörige Adresse hinterlegt ist,
- wobei beim Programmieren zu jedem Baustein eine lokale Symboltabelle angelegt wird, in der zumindest für jedes im Baustein verwendete Symbol die zugehörige Adresse hinterlegt ist,
- wobei beim Öffnen eines Bausteins in einem den Symbolen höchste Relevanz zuweisenden Modus
a) für jedes im Baustein verwendete Symbol in der lokalen Symboltabelle die zugehörige Adresse ermittelt,
b) mit der auf diese Weise ermittelten Adresse das gemäß der Symboltabelle der Adresse zugeordnete Symbol ermittelt und
c) im Falle der Ungleichheit zwischen verwendetem und gespeichertem Symbol eine Ausnahmebehandlung eingeleitet wird.

6. Verfahren zur Berücksichtigung globaler Abhängigkeiten und Symboländerungen bei Anwenderprogrammen eines Automatisierungssystems durch zusätzliche Rückgewinnungsinformationen,
- wobei das Programm aus Bausteinen besteht und wobei im Programm anstelle von Adressen zur Erleichterung der Lesbarkeit Symbole verwendbar sind,
- wobei in einer Symboltabelle für jedes verwendete Symbol die zugehörige Adresse hinterlegt ist,
- wobei beim Programmieren zu jedem Baustein eine lokale Symboltabelle angelegt wird, in der zumindest für jedes im Baustein verwendete Symbol die zugehörige Adresse hinterlegt ist,
- wobei beim Öffnen eines Bausteins in einem den Symbolen höchste Relevanz zuweisenden Modus
a) für jede im Baustein verwendete Adresse anhand der lokalen Symboltabelle das zugehörige Symbol ermittelt,
b) mit dem auf diese Weise ermittelten Symbol die gemäß der Symboltabelle dem Symbol zugeordnete Adresse ermittelt und
c) im Falle der Ungleichheit zwischen verwendeter und gespeicherter Adresse eine Ausnahmebehandlung eingeleitet wird.
